# EUROPÄISCHE PATENTANMELDUNG

(11) **EP 1 222 950 A1**
(43) Veröffentlichungstag der Anmeldung: **17.07.2002**
(21) Anmeldenummer: 02000664.9
(22) Anmeldetag: 11.01.2002
(51) Int. Cl.: B01D 29/01, B01D 29/64, B01D 29/94

(54) **Vorrichtung zum Trennen von durch Fräs- oder Schneidvorgänge erzeugten Flüssigkeiten**

(30) Priorität: 16.01.2001 CH 562001
(71) Anmelder: Kaminski, Ludwig, 9495 Triesen (LI)
(72) Erfinder: Kaminski, Ludwig, 9495 Triesen (LI)

(57) **Zusammenfassung**

Eine Vorrichtung zum Trennen von Flüssigkeit und von durch Fräs- oder Schneidvorgänge erzeugten Abfällen (9), insbesondere von bei der Fräsbehandlung von Kunststoff-Oberflächen entstehenden Abfällen, umfasst ein zur Aufnahme der von den Abfällen (9) getrennten Flüssigkeit vorgesehenes Gehäuse (11) und eine mit diesem Gehäuse (11) in Verbindung stehende Siebvorrichtung (3) auf. Die mit den Abfällen (9) versetzte Flüssigkeit wird über ein Einbringorgan (2) in die Siebvorrichtung (3) eingebracht. Der Siebvorrichtung (3) sind Mittel zum kontinuierlichen Ausbringen der Abfälle (9) zugeordnet, wobei die Abfälle (9) kontinuierlich gegen ein der Siebvorrichtung (3) zugeordnetes Ausbringungsorgan (7) gefördert werden. Die Siebvorrichtung (3) und gegebenenfalls das Gehäuse (11) sind zylinderförmig ausgebildet. Die Mittel zum kontinuierlichen Ausbringen sind als exzentrisch gelagerte Drehschieberanordnung (5,6) vorgesehen.

## Beschreibung

Die Erfindung betrifft eine Vorrichtung zum Trennen von Flüssigkeit und durch Fräsoder Schneidvorgänge erzeugten Abfällen, insbesondere von bei der Fräsbehandlung von Kunststoff-Oberflächen entstehenden Abfällen, nach dem Oberbegriff des Anspruchs 1

Derartige Vorrichtungen kommen beispielsweise bei der Bearbeitung von Kunstoffbrillengläsern zum Einsatz. Um beispielsweise Brillengläser aus Polycarbonat, CR 39 oder höher brechenden Kunststoffen mit CNC Maschinen zu fräsen, müssen sowohl die Gläser als auch die Werkzeuge gekühlt werden. Dies geschieht meistens mit Wasser, das durch Zusätze von Schleiföl und Stabilisatoren aufbereitet wird und auf eine gewünschte Temperatur gekühlt wird.

Das Fräsen geschieht mittels Fräsköpfen, die mit polykristallinen Diamantplättchen ausgestattet sind. Um zu verhindern, dass diese Schneidplättchen durch den Werkstoffabtrag beschädigt werden, spült die Kühlflüssigkeit mit entsprechend hoher Intensität.

Bei den Fräsvorgängen fallen sowohl gröbere Frässpäne als auch Kleinst- und Schwebeteilchen an. Diese werden jeweils auf unterschiedliche Weise entfernt.

Die Kühlflüssigkeit zirkuliert in einem geschlossenen Kreislauf, innerhalb dessen sie im allgemeinen wenigstens zwei Reinigungsprozessen unterzogen wird. Die Schwebeteilchen werden ausgefiltert oder durch Zentrifugieren abgetrennt.

Die anfallenden gröberen Abfälle, wie Späne, würden den Kreislauf behindern, da sie die Rohre verstopfen bzw. mit der Zeit die Filter oder die Zentrifugen blockieren. Daher wird üblicherweise am Ausfluss der CNC-Maschine ein Sieb angebracht, das die Späne auffängt und das regelmässig entleert werden muss. Dies geschieht in recht aufwendiger Art, da das mit den Frässpänen versetzte Sieb in bearbeitungs-abhängigen Abständen händisch gereinigt werden muss. Dies bedingt im allgemeinen eine Verringerung der Fertigungskapazität und hat erhöhte Kosten zur Folge.

Die Erfindung hat sich demgegenüber die Aufgabe gestellt, eine Vorrichtung bereitzustellen, mit deren Hilfe der oben beschriebene, von Hand vorgenommene Entleerungsprozess automatisiert durchgeführt werden kann.

Dies gelingt durch die Verwirklichung der kennzeichnenden Merkmale des Anspruchs 1. Alternative bzw. bevorzugte Ausbildungen sind in den Kennzeichen der abhängigen Ansprüche beschrieben.

Dadurch, dass der Siebvorrichtung Mittel zum kontinuierlichen Ausbringen der Abfälle zugeordnet sind, wobei die Abfälle kontinuierlich gegen ein der Siebvorrichtung zugeordnetes Ausbringungsorgan gefördert werden, muss der Herstellungsprozess nicht unterbrochen werden, da die Siebvorrichtung immer von den Frässpänen bzw. von den gröberen Schneidabfällen gereinigt wird.

Eine in der Siebvorrichtung angeordnete Drehschieberanordnung, die exzentrisch gelagert ist, fördert die in der Siebvorrichtung anfallenden Frässpäne gegen das Ausbringungsorgan, wobei gleichzeitig eine gewisse Verdichtung der Abfälle und damit eine gezieltere Ausbringung ermöglicht wird. Das Ausbringungsorgan selbst kann das Ausbringen über eine angetriebene Förderschnecke bewirken, bzw. kann dem Ausbringungsorgan eine Saugpumpe zum Absaugen der Abfälle oder ein die Abfälle komprimierender Stempel zugeordnet sein.

Die Vorrichtung wird im folgenden anhand einer Zeichnung rein beispielhaft beschrieben. Es zeigen:
Fig.1 eine erfindungsgemässe Vorrichtung mit als Drehschieberanordnung ausgebildeten Mitteln zum kontinuierlichen Ausbringen der Abfälle und;
Fig.2 eine Ausbildungsvariante einer erfindungsgemässen Vorrichtung mit einem in der Gehäusewandung angeordneten Sieb.

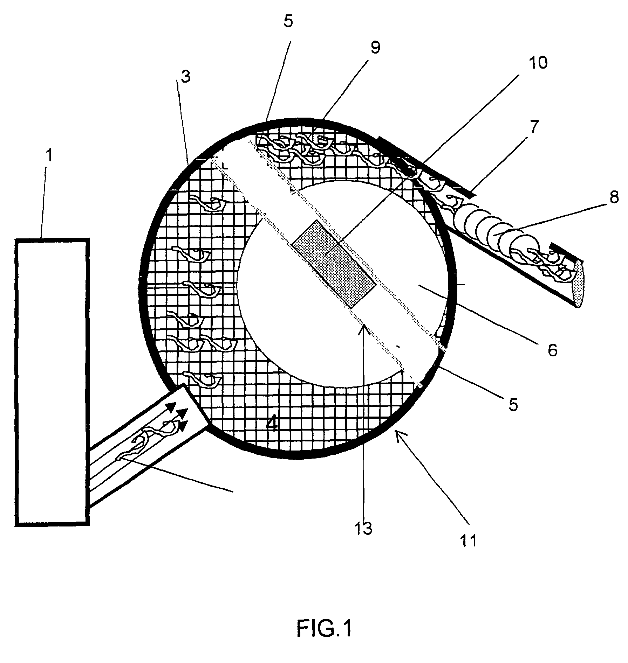

Figur 1 zeigt im Schnitt eine erfindungsgemässe Vorrichtung mit einer zylindrischen Siebvorrichtung 3, die in einem ebenfalls zylindrischen Gehäuse 11 angeordnet ist. Die Siebvorrichtung 3 spannt an ihrer unteren Begrenzung ein Sieb 4 mit mittlerer Maschenweite auf. So ist z.B. bei Bearbeitung von PC und höher brechenden Kunststoffen in der Brillenfertigung eine Maschenweite von etwa 1 mm üblich.

Die Fertigung der Kunststoffteile geschieht in einer CNC-Werkzeugmaschine 1, die mit Abfällen 9 versehene Kühlmittelflüssigkeit wird über ein Einbringungsorgan 2 der Siebvorrichtung 3 zugeführt, die Flüssigkeit geht durch das Sieb 4, und die gröberen Abfälle 9, wie Frässpäne, werden davon zurückgehalten.

In der Siebvorrichtung 3 ist exzentrisch ein Zylinder 6 mit kleinerem Durchmesser angeordnet, der planparallele Führungsschlitze 12 aufweist. Der Zylinder ist derart angeordnet, dass in einem Bereich der Zylinder 6 von der Innenwand der Siebvorrichtung 3 möglichst gering beabstandet ist.

In den Führungsschlitzen 12 des Zylinders 6 gleiten zwei Schieber 5, die über ein Federelement 10 an die Innenwand der Siebvorrichtung 3 gedrückt werden. Mit ihrer Unterkante liegen sie auf dem Sieb 4 auf. Das Material der Schieber 5, bzw. wenigstens derer Unterkante, ist derart gewählt, dass ein Festsetzen auf dem Sieb 4 möglichst vermieden wird. So kann beispielweise Kunststoff oder eine Teflonbeschichtung vorgesehen werden. Auch können die Unterkanten mit einem Bürsten- oder Schleppansatz versehen sein.

In der Nähe des geringsten Abstands des Zylinders 6 von der Innenwand der Siebvorrichtung 3 geht tangential ein rohrförmiges Ausbringungsorgan 7 ab.

Der Zylinder 6 wird in Rotation versetzt, wobei die Schieber 5 die Abfälle 9 auf dem Sieb mitnehmen und in das vor dem Ausbringungsorgan 7 verkleinerte Volumen drücken. Von da gelangen diese durch das Ausbringungsorgan 7 ins Freie.

Es besteht die Möglichkeit, im Ausbringungsrohr eine Förderschnecke 8 vorzusehen, die die Ausbringung unterstützt bzw. das Spanvolumen reduziert, indem die Späne durch ein sich verjüngendes Rohr gepresst werden, um das Abfallvolumen möglichst gering zu halten. Alternativ können die Späne auch über eine dem Ausbringungsorgan7 zugeordnete Saugpumpe (nicht dargestellt) ausgebracht werden oder mittels eines Stempels komprimiert werden.

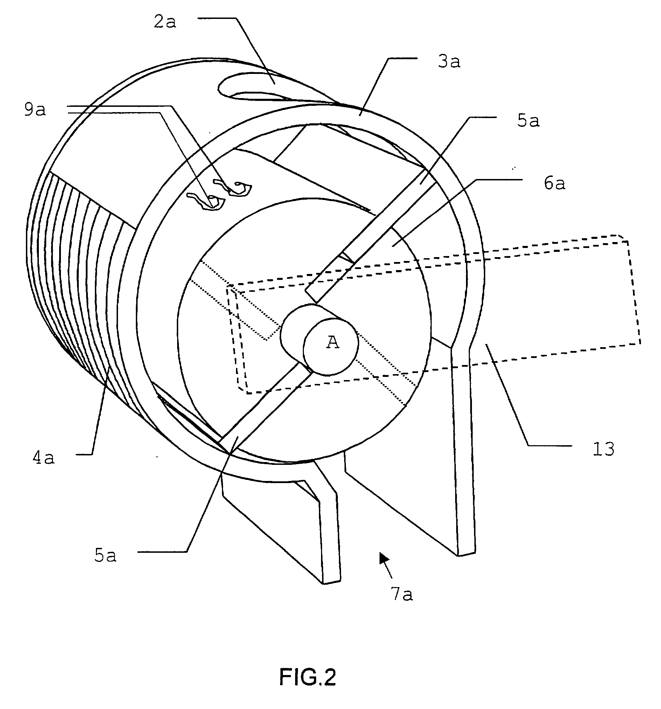

Eine Variante ist in Figur 2 gezeigt. Hier sind die Achsen des zylindrischen Gehäuses 3a und des exzentrisch angeordneten Zylinders 6a in Arbeitsstellung im wesentlichen horizontal ausgerichtet. Eine vordere Gehäuseabdeckung schliesst das Gehäuse 3a in Arbeitsstellung dicht ab, kann jedoch zur Entfernung von Restspänen und zur Reinigung des Gehäuses abgenommen werden. Die Achse A des Zylinders 6a ist vorzugsweise federnd gelagert, zum Beispiel mittels einer (strichliert angedeuteten) Halterung 13. Sollten Späne 9a zusammenballen und im Bereich des Spaltsiebs bzw. des Ausbringungsorgans 7a festsitzen, so kann der Zylinder 6a dem in einem gewissen Masse Rechnung tragen. Das Einbringungsorgan 2a für die Flüssigkeit ist - in Arbeitsstellung - an der Gehäuseoberseite angeordnet. Wird der Zylinder 6a - hier entgegen dem Uhrzeigersinn - gedreht, so wird die Flüssigkeit mit den Spänen zu einem Spaltsieb 4a hin gefördert, das den gleichen Krümmungsradius hat wie der Gehäusezylinder und in diesem angeordnet ist. Die Spalte dieses Spaltsiebs 4a können eine Breite von 0,1 bis 1mm haben und werden im allgemeinen normal zur Achse des Zylinders 6a verlaufend angeordnet sein, sie können jedoch auch schräg oder parallel zu dieser Achse angeordnet sein. Die Flüssigkeit tritt durch das Spaltsieb 4a aus, die Späne werden verdichtet und nahezu frei von Feuchtigkeit zum Ausbringungsorgan 7a gebracht. Auch hier besteht die Möglichkeit der Weiterförderung mittels Schnecke oder Stempel. Anstelle von zwei Schiebern 5a können auch mehrere Schieber vorgesehen sein, beispielsweise deren vier, wie in Figur 2 schematisch dargestellt. Schieber und/oder Gehäuseinnenwand können zur Verbesserung der Gleiteigenschaft aus Kunststoff ausgebildet sein, bzw. mit Teflon beschichtet sein.

## Patentansprüche

1. Vorrichtung zum Trennen von Flüssigkeit und von durch Fräs- oder Schneidvorgänge erzeugten Abfällen (9;9a), insbesondere von bei der Fräsbehandlung von Kunststoff-Oberflächen entstehenden Abfällen, mit einem zur Aufnahme der von den Abfällen (9;9a) getrennten Flüssigkeit vorgesehenen, insbesondere zylinderförmigen, Gehäuse (11;11a), einer mit diesem Gehäuse (11;11a) in Verbindung stehenden, insbesondere ebenfalls zylinderförmigen, Siebvorrichtung (3,4;4a), einem Einbringorgan (2;2a) für die mit den Abfällen (9;9a) versetzte Flüssigkeit in die Siebvorrichtung (3,4;4a), **dadurch gekennzeichnet, dass** der Siebvorrichtung (3,4;4a) Mittel zum kontinuierlichen Ausbringen der Abfälle (9;9a) in Form einer exzentrisch gelagerten Drehschieberanordnung (5,6;5a,6a) zugeordnet sind, wobei die Abfälle (9;9a) kontinuierlich gegen ein der Siebvorrichtung (3,4;4a) zugeordnetes Ausbringungsorgan (7;7a) gefördert werden.

2. Vorrichtung nach Anspruch 1, **dadurch gekennzeichnet, dass** das Ausbringungsorgan (7) im Verdichtungsbereich der Drehschieberanordnung (5,6) - vorzugsweise tangential - an der Siebvorrichtung (3) angelenkt ist.

3. Vorrichtung nach einem der Anspruch 1 oder 2, **dadurch gekennzeichnet, dass** das Ausbringungsorgan (7) rohrförmig ausgebildet ist und eine Förderschnecke (8) aufweist.

4. Vorrichtung nach einem der vorhergehenden Ansprüche, **dadurch gekennzeichnet, dass** das Ausbringungsorgan (7) eine Saugpumpe umfasst.

5. Vorrichtung nach einem der vorhergehenden Ansprüche, **dadurch gekennzeichnet, dass** die Siebvorrichtung ein der Gehäuseinnenwand zugeordentes Sieb, insbesondere ein Spaltsieb (4a), aufweist.

6. Vorrichtung nach einem der vorhergehenden Ansprüche, **dadurch gekennzeichnet, dass** die Achses (A) der Drehschieberanordnung (5a, 6a) federnd gelagert ist.

7. Vorrichtung nach einem der vorhergehenden Ansprüche, **dadurch gekennzeichnet, dass** die Schieber (5, 5a) der Drehschieberanordnung (5,6; 5a,6a) und /oder die Innenwand des Gehäuses (11,11a) aus Kunststoff gefertigt sind bzw. mit Teflon beschichtet sind.
